# EUROPÄISCHE PATENTSCHRIFT

(11) **EP 3 358 084 B1**
(45) Veröffentlichungstag und Bekanntmachung des Hinweises auf die Patenterteilung: **13.09.2023**
(21) Anmeldenummer: 17154478.6
(22) Anmeldetag: 02.02.2017
(51) Int. Cl.: E02B 17/00

(54) **KRAFTÜBERTRAGUNGSMODUL FÜR WIND-OFFSHORE STRUKTUREN SOWIE GRÜNDUNGSTRUKTUR**
POWER TRANSMISSION MODULE FOR WIND OFFSHORE STRUCTURES AND FOUNDATION STRUCTURE
MODULE DE TRANSMISSION DE PUISSANCE POUR DES ÉOLIENNES EN MER ET MASSIF DE FONDATION

(43) Veröffentlichungstag der Anmeldung: 08.08.2018
(73) Patentinhaber: ThyssenKrupp Steel Europe AG, 47166 Duisburg (DE)
(72) Erfinder: Reales, Emilio, 28355 Bremen (DE)
(74) Vertreter: Eisenführ Speiser

(56) Entgegenhaltungen:
- DE-U1-202012 009 678

## Beschreibung

Die Erfindung betrifft ein Kraftübertragungsmodul für eine Windenergieanlage, welches mittelbar oder unmittelbar mit einem Turm und einer Gründungsstruktur einer Windenergieanlage verbindbar ist, insbesondere für Offshore Anwendungen.

Die Erfindung betrifft auch eine Offshore-Gründungstruktur mit einem unteren, insbesondere Jacketabschnitt, welcher insbesondere mehrere fachwerkartig miteinander verbundene Streben aufweist, und einer Aufnahme für einen Turm einer Windenergieanlage.

Derartige Gründungstrukturen kommen insbesondere bei der Installation von Windenergieanlagen (WEA) in Offshore-Regionen mit großer Gewässertiefe zum Einsatz.

Aus DE 20 2012 009 678 U1 ist eine Tragstruktur für Offshore-Anlagen, insbesondere Windenergieanlagen, zur Verankerung am Meeresboden aus einer Vielzahl von miteinander verbundenen Streben bekannt. Mindestens zwei im Wesentlichen vertikale oder in einem Winkel von 0 Grad bis 30 Grad gegenüber einer Vertikalen geneigte Streben sind im Wesentlichen parallel zueinander angeordnet.

Aufgrund größer werdender Windenergieanlagen steigen ebenfalls die an die Offshore-Gründungsstrukturen gestellten Anforderungen bezüglich deren Tragfähigkeit. Ferner werden durch den Turm der Windenergieanlage erhebliche dynamische Kräfte in die Offshore-Gründungstruktur eingeleitet. Um Windenergieanlagen in Offshore-Revieren mit hohen Windstärken einsetzen zu können, besteht regelmäßig ein Bedarf an Gründungsstrukturen mit erhöhter Tragfähigkeit.

In der Wind-Offshore-Industrie werden derzeit bei Tragwerkstrukturen die Verbindung vom Turm der WEA zur Struktur über das sog. Transition Piece geführt, welches ein Rohr aufweist.

Über das Transition Piece (kurz TP) werden die Kräfte in die Substruktur also Gründungsstruktur eingeleitet. Heutiger Stand der Technik ist, diese Kräfte über eine Rohrverbindung kommend vom Mittelrohr mit der Tragstrukturaufnahme einzuleiten. Die heutigen TP sind schwer und benötigen große dickwandige Rohre um die Ermüdungslasten an den Schweißbereichen der Verbindungen abzufangen.

Es ist Aufgabe der vorliegenden Erfindung, ein Kraftübertragungsmodul für eine Windenergieanlage anzugeben, sowie eine Offshore-Gründungsstruktur, welche die Nachteile des Standes der Technik wenigstens teilweise vermeiden und die großen, dynamischen Kräfte von einer Windenergieanlage mit geringem konstruktiven Aufwand zu übertragen können.

Die Aufgabe wird gelöst durch ein Kraftübertragungsmodul mit den Merkmalen des Anspruchs 1. Die Erfindung zeichnet sich aus durch einen im Betrieb sich im wesentlichen horizontal erstreckenden oberen Ring, insbesondere Blech-Ring, einen im Betrieb sich im wesentlichen horizontal erstreckenden unteren Ring, insbesondere Blech-Ring, sowie mehreren im Betrieb sich im Wesentlichen in vertikaler Richtung zwischen dem oberen (Blech)-Ring und dem unteren (Blech)-Ring erstreckenden Blechsegmenten zur Übertragung von Kräften.

Die Erfindung löst die Spannungsverläufe durch günstige Blechkonstruktionen und durch einfachere geometrisch gerade liegende Schweißverbindungen. Die Anzahl der Blechsegmente wird durch Anzahl der aufnehmenden Rohrquerschnitte der Substruktur, d.h. der darunter liegenden Gründungsstruktur definiert.

Die Erfindung geht einen neuen Weg. Die Kräfte aus dem Turmsegment der Windenergieanlage werden über mehrere Blechsegmente, die einen spannungsfreundlichen Schnittverlauf besitzen, in die Substruktur, d.h. eine Gründungsstruktur eingebracht. Eine Besonderheit der Erfindung ist, das dieses über zwei beabstandet zueinander angeordnete Ringe, die mit Blechsegmenten nach Art von Blechflügeln verbunden sind, erfolgt. Durch die Erfindung lässt sich insgesamt das Gewicht und die Menge an notwendigem Material reduzieren und gleichzeitig der Kraftfluss durch die Struktur verbessern.

Gemäß einer bevorzugten Ausführungsform der Erfindung ist vorgesehen, dass die Blechsegmente mit dem oberen und unteren Ring verschweißt sind. So wird eine feste und dauerhafte Verbindung mit einfachen Mitteln erreicht.

Bei einer alternativen bevorzugten Ausführungsform ist vorgesehen, dass der obere Ring und/oder die Blechsegmente mit einem Transition-Piece-Rohr verbunden, insbesondere verschweißt ist / sind. So wird die Festigkeit der Struktur weiter erhöht. Es wird vorzugsweise nur die Fläche mit dem Mittelrohr verbunden die notwendig ist.

Eine weitere bevorzugte Ausführungsform sieht vor, dass mehrere Kraftübertragungssegmente mit den Blechsegmenten einerseits und dem unteren Ring andererseits verschweißt sind. Die Krafteinleitung von den Blechsegmenten auf den unteren Ring wird so deutlich verbessert. Die einzelnen Schweißnähte werden geringer beansprucht.

Gemäß einer Weiterbildung dieser Ausführungsform wird vorgeschlagen, dass die Kraftübertragungssegmente als Rohrhälften ausgebildet sind und dass zwei Rohrhälften an gegenüberliegenden Seitenflächen eines Blechsegmentes und dem unteren Ring angeschweißt sind. Um die Kräfte hier dann genau auf die unter dem Ring aufnehmenden Rohre zu übertragen und diese in den Rohrquerschnitt einzubringen, werden je zwei Rohrhälften an das untere Ende geschweißt. Besonders vorteilhaft ist es, wenn die Kraftübertragungssegmente, insbesondere die Rohrhälften, auf der oberen Seite des unteren Rings angeordnet sind und dass gegenüberliegend unterhalb des unteren Rings Streben, insbesondere Rohrabschnitte, eines mit dem Kraftübertragungsmodul verbindbaren Jacketabschnitts angeordnet und mit dem unteren Ring verschweißt sind.

Eine alternative Ausführungsform sieht vor, dass die Rohrhälften mittels eines Deckels verschlossen sind. So werden das Eindringen von Regenwasser und dergleichen verhindert und infolgedessen Korrosion und andere Nachteile vermieden.

Eine alternative Ausführungsform zeichnet sich dadurch aus, dass jedes Blechsegment sich ausgehend von dem oberen Ring wenigstens abschnittsweise radial nach außen und nach unten in Richtung auf den unteren Ring erstreckt. So kann bei günstigem Kraftfluss die von der Windenergieanlage eingeleitete Last über das erfindungsgemäße Modul auf eine breitere Grundstruktur übertragen werden. Beispielsweise kann der Durchmesser des unteren Endes des Turms 6000 mm betragen, während die Gründungsstruktur mit Ihrem oberen Abschnitt, insbesondere einer fachwerkartigen Jacketsstruktur in Ihrem oberen Bereich einen Durchmesser von etwa 14.000 mm aufweist; dies kann durch das sich radial nach außen erstreckende Blechsegment kompensiert werden. Eine weitere Optimierung ergibt sich dadurch, dass mindestens ein Blechsegment, vorzugsweise alle Blechsegmente, einen oberen im Wesentlichen rechteckigen Abschnitt und einen sich radial nach außen verbreiternden zweiten Abschnitt aufweisen. Vorzugsweise sind gegenüberliegend zwei Rohrhälften außen an den Blechsegmenten und dem unteren Ring angeschweißt.

Eine Weiterbildung sieht vor, dass die mehreren Blechsegmente im Wesentlichen gleichmäßig beabstandet und sich radial nach außen erstreckend um den Umfang verteilt angeordnet sind und vorzugsweise mit dem Transition-Piece-Rohr wenigstens abschnittsweise oben verschweißt sind. So ergibt sich eine gleichmäßige Lastverteilung.

Eine günstige Herstellbarkeit ergibt sich dadurch, dass der obere Ring und/oder der untere Ring als einstückiges Blech ausgebildet ist / sind oder aus mehreren Blechsegmenten zusammengesetzt ist/sind.

Gemäß einer alternativen wird vorgeschlagen, Ausführungsform, die eine weitere Festigkeitserhöhung erreicht, wird vorgeschlagen, dass der obere Ring und/oder der untere Ring innen im Wesentlichen einen kreisförmigen Ausschnitt aufweist und mit dem Transition Piece Rohr verschweißt ist und außen im Wesentlichen einen kreisförmigen Rand oder einen aus im Wesentlichen geraden Abschnitten und gekrümmten Abschnitten bestehenden Rand aufweist.

Zweckmäßigerweise weist der obere Ring und/oder der untere Ring im Wesentlichen sechs abgerundete Randabschnitte auf, wobei sechs oder zwölf Blechsegmente zwischen dem oberen und unteren Ring angeordnet sind. So ist die Struktur angepasst an ein im Wesentlichen hexagonales Gründungsfundament.

Die Aufgabe wird ferner gelöst mit einer Offshore-Gründungstruktur mit einem unteren, insbesondere Jacketabschnitt, welcher insbesondere mehrere fachwerkartig miteinander verbundene Streben aufweist, und einer Aufnahme für einen Turm, insbesondere einer Windenergieanlage, welche ein erfindungsgemäßes Kraftübertragungsmodul aufweist; hinsichtlich der diesbezüglichen Vorteile wird auf die obigen und nachfolgenden Beschreibungen Bezug genommen.

Eine Weiterbildung der Gründungsstruktur sieht vor, dass mehrere Streben, insbesondere Rohrabschnitte, des Jacketabschnitts mit dem unteren Ring des Kraftübertragungsmoduls verbunden, insbesondere verschweißt sind. Die oberen Enden der Rohrabschnitte sind vorzugsweise gegenüberliegend von jeweils einem Blechsegment an dem unteren Ring angeordnet.

Besonders bevorzugt ist es, dass jeweils zwei Rohrabschnitte ein X bilden und somit in einem spitzen Winkel relativ zu der durch den unteren Ring gebildeten Ebene angeordnet sind. Zweckmäßigerweise sind die gegenüberliegend an den Blechsegmenten angeordneten Rohrhälften gegenüberliegend von den Endabschnitten der Rohrabschnitte des Jacketabschnitts angeordnet.

Weitere Merkmale und Vorteile der Erfindung ergeben sich aus den Unteransprüchen sowie der nachfolgenden Beschreibung bevorzugter Ausführungsbeispiele unter Bezugnahme auf die Zeichnungen. Es zeigen:
Fig. 1 ein Ausführungsbeispiel einer erfindungsgemäßen Offshore-Gründungsstruktur mit erfindungsgemäßem Kraftübertragungsmodul in einer Seitenansicht;
Fig. 2 das erfindungsgemäße Kraftübertragungsmodul in vergrößerter Seitenansicht;
Fig. 3 das erfindungsgemäße Kraftübertragungsmodul in Draufsicht;
Fig. 4 das erfindungsgemäße Kraftübertragungsmodul in perspektivischer Ansicht von oben;
Fig. 5 das erfindungsgemäße Kraftübertragungsmodul in perspektivischer Ansicht von oben ohne oberen Ring und ohne unteren Ring;
Fig. 6 ein erfindungsgemäßes Blechsegment des Kraftübertragungsmoduls mit zwei Rohrhälften, außen an dem Blechsegment angeschweißt in perspektivischer Ansicht;
Fig. 7 das erfindungsgemäße Blechsegment mit zwei Rohrhälften in Explosionsdarstellung;
Fig. 8 einen unteren Ring des Kraftübertragungsmoduls in perspektivischer Ansicht von oben;
Figur 9 einen oberen Ring des Kraftübertragungsmoduls in perspektivischer Ansicht von oben.

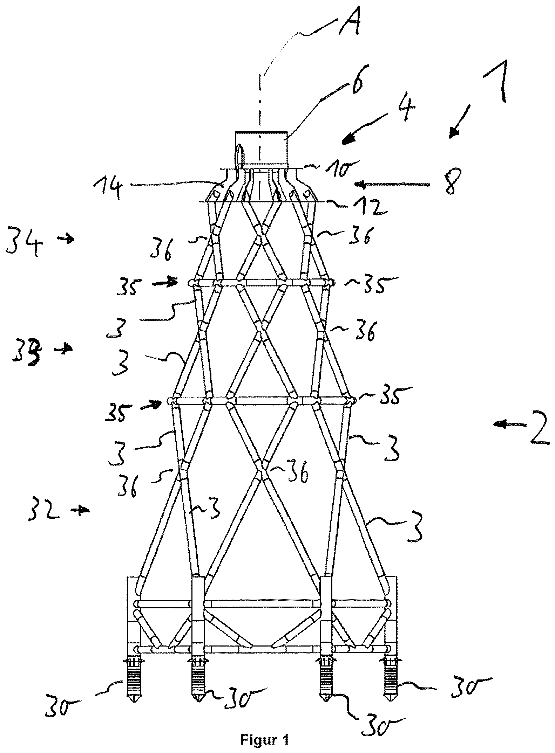

Gemäß Fig. 1 weist die erfindungsgemäße Offshore-Gründungsstruktur 1 einen unteren Abschnitt 2, im Ausführungsbeispiel einen so genannten Jacketabschnitt 2 auf, welcher mehrere fachwerkartig miteinander verbundene Streben 3 umfasst. Der unter Abschnitt 2 könnte auch andere Formen, Strukturen und Elemente aufweisen. Die Offshore-Gründungsstruktur 1 für Windenergieanlagen (WEA) weist gemäß Figur 1 sechs im Meeresgrund verankerbare Pfähle 30 auf. Mit den Pfählen 30 ist der untere, hier Jacketabschnitt 2 verbunden. Er ist mit ihren sechs unteren Ecken mit den sechs Pfählen 30 verbunden. Er hat einen im Wesentlichen sechseckigen Querschnitt bezogen auf eine Längsachse A. Der Jacketabschnitt 2 ist im Wesentlichen sich von unten nach oben verjüngend ausgebildet. Der Jacketabschnitt 2 weist drei übereinander angeordnete Segmente 32, 33, 34 auf, die koaxial zueinander angeordnet sind. Der Jacketabschnitt 2, umfassend die Segmente 32, 33, 34 ist aus Rohrabschnitten bzw. Streben 3 (nur jeweils eine mit Bezugszeichen versehen) gebildet, welche mittels Knoten 35, 36 (jeweils nur zwei mit Bezugszeichen versehen) miteinander verbunden sind. Der Knoten 35 ist als sogenannter abgerundeter Knoten bzw. "Roundet Node" ausgebildet; für Details zu diesem Knoten wird insbesondere auf WO 2013/139816 A2 verwiesen, in der diese Knoten im Detail beschrieben sind und deren Offenbarungsgehalt mittels Referenz hierin einbezogen wird. Zwei jeweils schräg angeordnete Rohrabschnitte 3 bilden jeweils eine X- Form aus. Sie sind an einem Knoten 36 miteinander verbunden.

In jedem Segment sind insgesamt sechs X-förmige Gebilde aus jeweils zwei Bauabschnitten drei angeordnet. Zwei benachbarte Segmente 22,33 bzw. 33,34 sind mittels eines umlaufenden Ringes miteinander verbunden, wobei der Ring aus benachbarten und miteinander verschweißten Rohren oder Rohrabschnitten 5 gebildet ist, die horizontal angeordnet sind.

Wie insbesondere Figur 1 und die Figuren 2 - 4 zeigen, ist oben an der Offshore-Gründungsstruktur 1 ist als Aufnahme für einen Turm (nicht gezeigt ) einer Windenergieanlage ein so genanntes Transition - Piece 4 mit einem Transition-Piece-Rohr 6 angeordnet. Rohr 6 weist eine Ausnehmung auf, welche sich entlang einer im Wesentlichen vertikalen Längsachse A erstreckt und zylindrisch ausgebildet ist.

Ein Kraftübertragungsmodul 8 ist im Ausführungsbeispielen mittels des Rohres 6 des Transition-Pieces mit dem Turm einer Windenergieanlage verbindbar. Ias Kraftübertragungsmodul hat einen im Betrieb sich im wesentlichen horizontal erstreckenden oberen Ring 10, im Beispiel Blech-Ring 10, und einen im Betrieb sich im wesentlichen horizontal erstreckenden unteren Ring 12, im Beispiel Blech-Ring 12, sowie mehrere im Betrieb sich im Wesentlichen in vertikaler Richtung zwischen dem oberen Ring 10 und dem unteren Ring 12 erstreckende Blechsegmente 14 zur Übertragung von Kräften. Die mehreren Blechsegmente 14 sind ausgebildet und geeignet, Kräfte aufgrund der Lasten der Windenergieanlage nach unten in die Gründungsstruktur 2, genauer gesagt dem oberen Abschnitt 2 zu übertragen oder abzuleiten, der im Ausgangsbeispiel als Jacketabschnitt 2 ausgebildet ist.

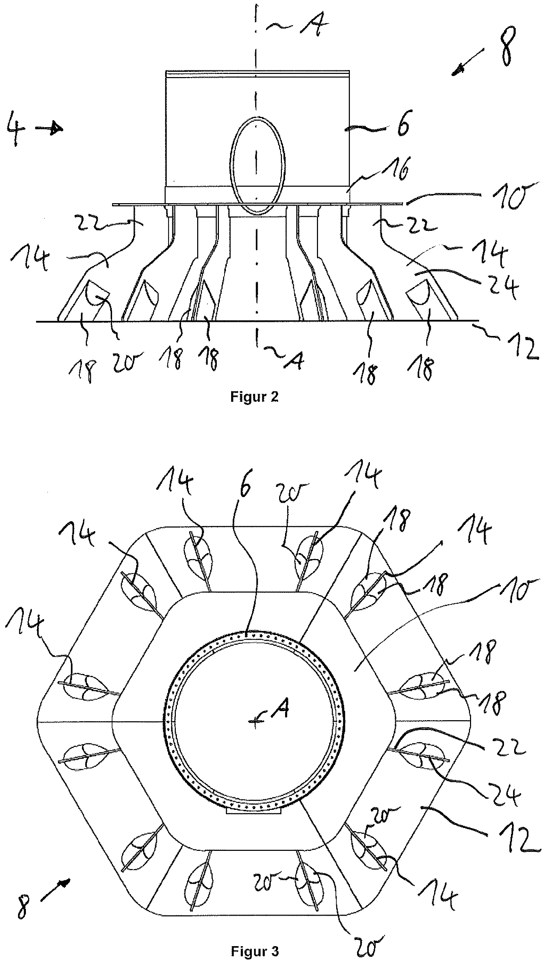

Die Blechsegmente 14 sind fest mit dem oberen Ring 10 und unteren Ring 12 verbunden, vorzugsweise verschweißt. Der obere Ring 10 und die Blechsegmente 14 sind im Ausführungsbeispiel mit dem Transition-Piece-Rohr 6 verbunden, insbesondere verschweißt. Der obere Ring 10 ist entlang einer umlaufenden Schweißnaht mit dem Ring 6 verschweißt; ein Verstärkungsring kann zusätzlich auf dem Rohr 6 aufgebracht sein. Jedes der Blechsegmente 14 ist im oberen Abschnitt entlang eines oberen, geraden Randes 15, vergleiche Figuren 2, 4, 5, 6, 7, vorzugsweise beidseitig mit der unteren Oberfläche des Rings 10 und entlang eines seitlichen Randes 17 vorzugsweise beidseitig mit dem Rohr 6 und des weiteren unten entlang eines geraden Randes 19 mit der oberen Oberfläche des Rings 12 vorzugsweise beidseitig verschweißt.

Das Kraftübertragungsmodul 8 weist zusätzlich mehrere Kraftübertragungssegmente, die als Rohrhälften 18 ausgebildet sind, auf, welche jeweils mit den Blechsegmenten 14 einerseits und dem unteren Ring 12 andererseits verschweißt sind. Jeweils zwei Rohrhälften 18 sind paarweise an gegenüberliegenden Seitenflächen eines Blechsegmentes 14 und dem unteren Ring 12 angeschweißt. Die Rohrhälften 18 sind außen an den Blechsegmenten 14 und dem unteren Ring 12 angeschweißt.

Gegenüberliegend von den Kraftübertragungssegmenten in Form der Rohrhälften 18 sind unterhalb des unteren Rings 12 die Streben 3 in Form der Rohrabschnitte 3 des Jacketabschnitts 2 angeordnet und jeweils mit ihren oberen Enden mit dem unteren Ring 12 verschweißt sind. Durch diese gegenüberliegende Anordnung ergibt sich ein günstiger Kraftluss von oben nach unten. Die zwei Rohrabschnitte 3 sind in einem spitzen Winkel relativ zu der durch den unteren Ring 12 gebildeten Ebene angeordnet sind.

Die Rohrhälften 18 sind, wie dem Figuren entnehmbar ist, mittels eines Deckels 20 verschlossen.

Jedes Blechsegment 14 erstreckt sich, wie insbesondere den Figuren 2-5 entnehmbar ist, ausgehend von dem oberen Ring 10 wenigstens abschnittsweise radial nach außen und nach unten in Richtung auf den unteren Ring 12. Jedes Blechsegment 14 hat einen oberen im Wesentlichen rechteckigen Abschnitt 22, der mit dem oberen Ring 10 verschweißt ist, und einen sich wenigstens abschnittsweise radial nach außen verbreiternden unteren zweiten Abschnitt 24, der mit dem unteren Ring 12 verschweißt ist.

Wie Figuren 3-5 gut zeigen, sind die mehreren Blechsegmente 14 im Wesentlichen gleichmäßig beabstandet um den Umfang verteilt zueinander angeordnet und/ oder erstrecken sich - sternförmig - radial nach außen; sie sind vorzugsweise mit dem Transition-Piece-Rohr 6 wenigstens abschnittsweise oben verschweißt.

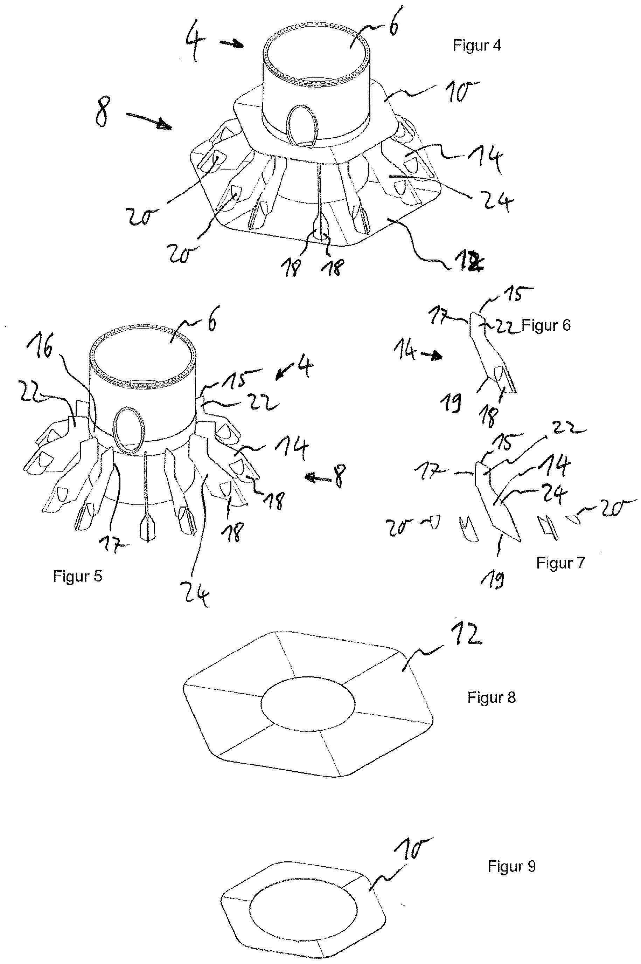

Gemäß einer Variante sind der obere Ring 10 und der untere Ring 12 als einstückiges Blech ausgebildet ist, gemäß einer alternativen, in den Figuren gezeigten Variante, siehe insbesondere auch Figuren 8 und 9, sind der obere Ring 10 und der untere Ring 12 aus mehreren Blechsegmenten zusammengesetzt. Der obere Ring 10 und der untere Ring 12 haben innen einen kreisförmigen Ausschnitt und außen im Wesentlichen einen kreisförmigen Rand (nicht gezeigt) oder einen in den Figuren (Fig. 8, 9) erkennbaren Rand aus im Wesentlichen geraden Abschnitten und gekrümmten Abschnitten. Der obere Ring 10 und der untere Ring 12 haben im Wesentlichen sechs abgerundete Randabschnitte und sechs oder zwölf Blechsegmente.

## Patentansprüche

1. Kraftübertragungsmodul (8) für eine Offshore Windenergieanlage, welches mittelbar oder unmittelbar mit einem Turm einer Windenergieanlage verbindbar ist, mit
- einem im Betrieb sich im Wesentlichen horizontal erstreckenden oberen Blech-Ring (10), und
- einem im Betrieb sich im Wesentlichen horizontal erstreckenden unteren Blech-Ring (12),
- mehreren im Betrieb sich im Wesentlichen in vertikaler Richtung zwischen dem oberen Blech-Ring (10) und dem unteren Blech-Ring (12) erstreckenden Blechsegmenten (14) zur Übertragung von Kräften, wobei die Blechsegmente (14) mit dem oberen und unteren Blech-Ring (10, 12) verschweißt sind,
**dadurch gekennzeichnet, dass** mehrere zusätzliche Kraftübertragungssegmente mit den Blechsegmenten (14) einerseits und dem unteren Blech-Ring (10) andererseits verschweißt sind, wobei die zusätzlichen Kraftübertragungssegmente als Rohrhälften (18) ausgebildet sind und wobei zwei Rohrhälften (18) an gegenüberliegenden Seitenflächen eines Blechsegmentes (14) und dem unteren Blech-Ring (10) angeschweißt sind.

2. Kraftübertragungsmodul (8) nach Anspruch 1,
**dadurch gekennzeichnet, dass** der obere Blech-Ring (10) und/oder die Blechsegmente (14) mit einem Transition-Piece-Rohr (6) verbunden, insbesondere verschweißt ist / sind.

3. Kraftübertragungsmodul (8) nach Anspruch 1 oder 2,
**dadurch gekennzeichnet, dass** die Kraftübertragungssegmente, insbesondere die Rohrhälften (18), auf der oberen Seite des unteren Blech-Rings (10) angeordnet sind und dass gegenüberliegend unterhalb des unteren Blech-Rings (12) Streben (3), insbesondere Rohrabschnitte, eines mit dem Kraftübertragungsmodul (8) verbindbaren Jacketabschnitts (2) angeordnet und mit dem unteren Blech-Ring (12) verschweißt sind.

4. Kraftübertragungsmodul (8) nach mindestens einem der vorstehenden Ansprüche,
**dadurch gekennzeichnet, dass** die Rohrhälften (18) mittels eines Deckels (20) verschlossen sind.

5. Kraftübertragungsmodul (8) nach mindestens einem der vorstehenden Ansprüche,
**dadurch gekennzeichnet, dass** jedes Blechsegment sich ausgehend von dem oberen Blech-Ring (10) wenigstens abschnittsweise radial nach außen und nach unten in Richtung auf den unteren Blech-Ring (12) erstreckt.

6. Kraftübertragungsmodul (8) nach mindestens einem der vorstehenden Ansprüche,
**dadurch gekennzeichnet, dass** mindestens ein Blechsegment (14), vorzugsweise alle Blechsegmente (14), einen oberen im Wesentlichen rechteckigen Abschnitt und einen sich radial nach außen verbreiternden zweiten Abschnitt aufweisen.

7. Kraftübertragungsmodul (8) nach mindestens einem der vorstehenden Ansprüche,
**dadurch gekennzeichnet, dass** die Kraftübertragungssegmente, insbesondere Rohrhälften (18), außen an den Blechsegmenten (14) und dem unteren Blech-Ring (12) angeschweißt sind; und/oder
**dadurch gekennzeichnet, dass** die mehreren Blechsegmente (14) im Wesentlichen gleichmäßig beabstandet und sich radial nach außen erstreckend um den Umfang verteilt angeordnet sind und vorzugsweise mit dem Transition-Piece-Rohr (6) wenigstens abschnittsweise oben verschweißt sind und/oder
**dadurch gekennzeichnet, dass** der obere Blech-Ring (10) und/oder der untere Blech-Ring (12) als einstückiges Blech ausgebildet ist / sind oder aus mehreren Blechsegmenten (14) zusammengesetzt ist/sind; und/oder
**dadurch gekennzeichnet, dass** der obere Blech-Ring (10) und/oder der untere Blech-Ring (12) innen im Wesentlichen einen kreisförmigen Ausschnitt aufweist und mit dem Transition Piece Rohr (6) verschweißt ist und außen im Wesentlichen einen kreisförmigen Rand oder einen aus im Wesentlichen geraden Abschnitten und gekrümmten Abschnitten bestehenden Rand aufweist; und/oder
**dadurch gekennzeichnet, dass** der obere Blech-Ring (10) und/oder der untere Blech-Ring (12) im Wesentlichen sechs abgerundete Randabschnitte aufweist und sechs oder zwölf Blechsegmente (14) zwischen dem oberen und unteren Blech-Ring (10, 12) angeordnet sind.

8. Offshore-Gründungstruktur (1) mit
einem unteren Jacketabschnitt (2), welcher mehrere fachwerkartig miteinander verbundene Streben (3) aufweist, und
einer Aufnahme für einen Turm einer Windenergieanlage,
**gekennzeichnet durch** ein Kraftübertragungsmodul (8) nach mindestens einem der vorstehenden Ansprüche.

9. Offshore-Gründungsstruktur (1) nach Anspruch 8,
**dadurch gekennzeichnet, dass** mehrere Streben (3), insbesondere Rohrabschnitte (5), des Jacketabschnitts (2) mit dem unteren Blech-Ring (12) des Kraftübertragungsmoduls (8) verbunden, insbesondere verschweißt sind.

10. Offshore-Gründungsstruktur (1) nach Anspruch 9,
**dadurch gekennzeichnet, dass** die oberen Enden der Rohrabschnitte (5) gegenüberliegend von jeweils einem Blechsegment (14) an dem unteren Blech-Ring (12) angeordnet sind.

11. Offshore-Gründungsstruktur (1) nach mindestens einem der Ansprüche 8-10,
**dadurch gekennzeichnet, dass** jeweils zwei Rohrabschnitte (5) ein X bilden und somit in einem spitzen Winkel relativ zu der durch den unteren Blech-Ring (12) gebildeten Ebene angeordnet sind.

12. Offshore-Gründungsstruktur (1) nach mindestens einem der Ansprüche 8-11,
**dadurch gekennzeichnet, dass** die gegenüberliegend an den Blechsegmenten (14) angeordneten Rohrhälften (18) gegenüberliegend von den Endabschnitten der Rohrabschnitte (5) des Jacketabschnitts (2) angeordnet sind.

## Claims

1. Force transmission module (8) for an offshore wind turbine, which can be connected directly or indirectly to a tower of a wind turbine, having
- an upper sheet metal ring (10) which extends substantially horizontally during operation, and
- a lower sheet metal ring (12) which extends substantially horizontally during operation,
- pluralities of sheet metal segments (14) which extend substantially in a vertical direction between the upper sheet metal ring (10) and the lower sheet metal ring (12) during operation in order to transmit forces, wherein the sheet metal segments (14) are welded to the upper and lower sheet metal ring (10, 12),
**characterised in that** a plurality of additional force transmission segments are welded to the sheet metal segments (14), on the one hand, and the lower sheet metal ring (10), on the other hand, wherein the additional force transmission segments are in the form of pipe halves (18) and wherein two pipe halves (18) are welded to opposing side faces of a sheet metal segment (14) and the lower sheet metal ring (10).

2. Force transmission module (8) according to claim 1, **characterised in that** the upper sheet metal ring (10) and/or the sheet metal segments (14) is/are connected to a transition piece pipe (6), in particular welded.

3. Force transmission module (8) according to claim 1 or 2,
**characterised in that** the force transmission segments, in particular the pipe halves (18), are arranged at the upper side of the lower sheet metal ring (10) and **in that** opposite below the lower sheet metal ring (12) struts (3), in particular pipe portions, of a jacket portion (2) which can be connected to the force transmission module (8) are arranged and welded to the lower sheet metal ring (12).

4. Force transmission module (8) according to at least one of the preceding claims, **characterised in that** the pipe halves (18) are closed by means of a cover (20).

5. Force transmission module (8) according to at least one of the preceding claims, **characterised in that** each sheet metal segment extends from the upper sheet metal ring (10) at least partially radially outwards and downwards in the direction towards the lower sheet metal ring (12).

6. Force transmission module (8) according to at least one of the preceding claims, **characterised in that** at least one sheet metal segment (14), preferably all the sheet metal segments (14), has/have an upper substantially rectangular portion and a second portion which expands radially outwards.

7. Force transmission module (8) according to at least one of the preceding claims,
**characterised in that** the force transmission segments, in particular pipe halves (18), are welded externally to the sheet metal segments (14) and the lower sheet metal ring (12); and/or
**characterised in that** the plurality of sheet metal segments (14) are arranged in a state distributed with substantially uniform spacing and so as to extend radially outwards around the circumference and are preferably welded to the transition piece pipe (6) at least partially at the top and/or
**characterised in that** the upper sheet metal ring (10) and/or the lower sheet metal ring (12) is/are in the form of an integral metal sheet or is/are composed of pluralities of sheet metal segments (14); and/or
**characterised in that** the upper sheet metal ring (10) and/or the lower sheet metal ring (12) substantially has internally a circular cut-out and is welded to the transition piece pipe (6) and externally substantially has a circular edge or an edge comprising substantially linear portions and curved portions; and/or
**characterised in that** the upper sheet metal ring (10) and/or the lower sheet metal ring (12) has substantially six rounded edge portions and six or twelve sheet metal segments (14) are arranged between the upper and lower sheet metal ring (10, 12).

8. Offshore foundation structure (1) having
a lower jacket portion (2) which has a plurality of struts (3) which are connected to each other in the manner of a latticework, and
a receiving member for a tower of a wind turbine,
**characterised by** a force transmission module (8) according to at least one of the preceding claims.

9. Offshore foundation structure (1) according to claim 8,
**characterised in that** a plurality of struts (3), in particular pipe portions (5), of the jacket portion (2) are connected, in particular welded, to the lower sheet metal ring (12) of the force transmission module (8).

10. Offshore foundation structure (1) according to claim 8,
**characterised in that** the upper ends of the pipe portions (5) are arranged opposite a sheet metal segment (14) in each case on the lower sheet metal ring (12).

11. Offshore foundation structure (1) according to at least one of claims 8 to 10,
**characterised in that** two pipe portions (5) in each case form an X and consequently are arranged at an acute angle relative to the plane formed by the lower sheet metal ring (12).

12. Offshore foundation structure (1) according to at least one of claims 8 to 11,
**characterised in that** the pipe halves (18) which are arranged opposite each other on the sheet metal segments (14) are arranged opposite the end portions of the pipe portions (5) of the jacket portion (2).

## Revendications

1. Module de transmission de force (8) pour une éolienne en mer, lequel peut être relié indirectement ou directement à un mât d'une éolienne, avec
- une bague en tôle supérieure (10) s'étendant en fonctionnement de manière sensiblement horizontale, et
- une bague en tôle inférieure (12) s'étendant en fonctionnement de manière sensiblement horizontale,
- plusieurs segments de tôle (14) s'étendant en fonctionnement sensiblement dans une direction verticale entre la bague en tôle supérieure (10) et la bague en tôle inférieure (12), pour transmettre des forces, dans lequel les segments de tôle (14) sont soudés à la bague de tôle supérieure et à la bague de tôle inférieure (10, 12),
**caractérisé en ce que** plusieurs segments de transmission de force supplémentaires sont soudés d'une part aux segments de tôle (14) et d'autre part à la bague en tôle inférieure (10), dans lequel les segments de transmission de force supplémentaires sont réalisés en tant que moitiés de tube (18) et dans lequel deux moitiés de tube (18) sont appliquées par soudage sur des surfaces latérales se faisant face d'un segment de tôle (14) et sur la bague en tôle inférieure (10).

2. Module de transmission de force (8) selon la revendication 1,
**caractérisé en ce que** la bague en tôle supérieure (10) et/ou les segments de tôle (14) sont reliés, en particulier sont soudés, à un tube de pièce de transition (6).

3. Module de transmission de force (8) selon la revendication 1 ou 2,
**caractérisé en ce que** les segments de transmission de force, en particulier les moitiés de tube (18), sont disposés sur le côté supérieur de la bague en tôle inférieure (10), et que des entretoises (3), en particulier des sections tubulaires, d'une section d'ossature (2) pouvant être reliée au module de transmission de force (8) sont disposées en vis-à-vis sous la bague en tôle inférieure (12) et sont soudées à la bague en tôle inférieure (12).

4. Module de transmission de force (8) selon au moins l'une quelconque des revendications précédentes,
**caractérisé en ce que** les moitiés de tube (18) sont fermées au moyen d'un couvercle (20).

5. Module de transmission de force (8) selon au moins l'une quelconque des revendications précédentes,
**caractérisé en ce que** chaque segment de tôle s'étend, en partant de la bague en tôle supérieure (10), au moins par endroits radialement vers l'extérieur et vers le bas en direction de la bague en tôle inférieure (12).

6. Module de transmission de force (8) selon au moins l'une quelconque des revendications précédentes,
**caractérisé en ce qu'**au moins un segment de tôle (14), de préférence tous les segments de tôle (14), présente une section supérieure sensiblement rectangulaire et une deuxième section s'élargissant vers l'extérieur radialement.

7. Module de transmission de force (8) selon au moins l'une quelconque des revendications précédentes,
**caractérisé en ce que** les segments de transmission de force, en particulier les moitiés de tube (18), sont appliqués par soudage à l'extérieur sur les segments de tôle (14) et la bague en tôle inférieure (12) ; et/ou
**caractérisé en ce que** les plusieurs segments de tôle (14) sont espacés de manière sensiblement homogène et sont disposés de manière répartie en périphérie de manière à s'étendre vers l'extérieur radialement et sont soudés au moins par endroits en haut de préférence au tube de pièce de transition (6) et/ou
**caractérisé en ce que** la bague en tôle supérieure (10) et/ou la bague en tôle inférieure (12) est réalisée/sont réalisées en tant que tôle d'un seul tenant ou est composée/sont composées de plusieurs segments de tôle (14) ; et/ou
**caractérisé en ce que** la bague en tôle supérieure (10) et/ou la bague en tôle inférieure (12) présentent à l'intérieur sensiblement une partie circulaire et sont soudées au tube de pièce de transition (6) et présentent à l'extérieur sensiblement un bord circulaire ou un bord constitué de sections sensiblement droites et de sections incurvées ; et/ou
**caractérisé en ce que** la bague en tôle supérieure (10) et/ou la bague en tôle inférieure (12) présentent sensiblement six sections de bord arrondies et six ou douze segments de tôle (14) sont disposés entre la bague en tôle supérieure et la bague en tôle inférieure (10, 12).

8. Structure de fondation en mer (1) avec
une section d'ossature inférieure (2), laquelle présente plusieurs entretoises (3) reliées entre elles à la manière d'un treillis, et
un logement pour un mât d'une éolienne,
**caractérisée par** un module de transmission de force (8) selon au moins l'une quelconque des revendications précédentes.

9. Structure de fondation en mer (1) selon la revendication 8,
**caractérisée en ce que** plusieurs entretoises (3), en particulier des sections tubulaires (5), de la section d'ossature (2), sont reliées, en particulier sont soudées, à la bague en tôle inférieure (12) du module de transmission de force (8).

10. Structure de fondation en mer (1) selon la revendication 9,
**caractérisée en ce que** les extrémités supérieures des sections tubulaires (5) sont disposées en vis-à-vis par rapport à respectivement un segment de tôle (14) sur la bague en tôle inférieure (12).

11. Structure de fondation en mer (1) selon au moins l'une quelconque des revendications 8-10,
**caractérisée en ce que** respectivement deux sections tubulaires (5) forment un X et
sont disposées ainsi selon un angle aigu par rapport au plan formé par la bague en tôle inférieure (12).

12. Structure de fondation en mer (1) selon au moins l'une quelconque des revendications 8-11,
**caractérisée en ce que** les moitiés de tube (18) disposées en vis-à-vis sur les segments de tôle (14) sont disposées en vis-à-vis par rapport aux sections d'extrémité des sections tubulaires (5) de la section d'ossature (2).
